# EUROPEAN PATENT APPLICATION

(11) **EP 2 842 782 A1**
(43) Date of publication of application: **04.03.2015**
(21) Application number: 12875295.3
(22) Date of filing: 24.04.2012
(51) Int. Cl.: B60K 11/04, B60H 1/32

(54) **COOLING DEVICE FOR VEHICLE**

(71) Applicant: TOYOTA JIDOSHA KABUSHIKI KAISHA, Toyota-shi, Aichi-ken, 471-8571 (JP)
(72) Inventor: AJISAKA, Satoshi, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/060996
(87) International publication number: WO 2013/161010

(57) **Abstract**

In a vehicle cooling device, a heat exchanger is cooled efficiently.

A condenser (40C) is disposed at a vehicle width direction side of an engine (12A), and further toward a vehicle upper side and a vehicle front side than a transmission (12B). A radiator (40R) is disposed at a floor tunnel (26) at a rear of the engine. The condenser (40C) and the radiator (40R) both introduce air from a vehicle front, and air that has passed through the condenser (40C) and been warmed is discharged-out toward a rear of the radiator (40R) via a communication hole (45) that is above the radiator (40R). Because the air that has passed through the condenser (40C) and been warmed is not introduced into the radiator (40R), heat exchange efficiency of the radiator (40R) improves.

## Description

### Technical Field

The present invention relates to a vehicle cooling device that is equipped with a power unit.

### Background Art

Disposed at the front portion of a vehicle are a power unit, and a heat exchanger such as a radiator that cools the power unit or a condenser that is a structural member of a heat pump of an air conditioner or the like. Cooling and the like of the heat exchanger are carried out by air that flows from the vehicle front toward the vehicle rear (for example, refer to Patent Document 1).

### Prior Art Documents

### Patent Documents

[Patent Document 1] International Publication No. WO 2010/097890 A1

### SUMMARY OF INVENTION

### Technical Problem

However, when the condenser is disposed so as to substantially fit tightly to the vehicle front side of the radiator, for example, at times of high engine load when cooling of the radiator is needed, when air that has passed through the condenser and been warmed flows into the radiator, there are cases in which the cooling efficiency of the radiator decreases, and there is room for improvement.

In view of the above-described circumstances, the invention of the present application proposes a vehicle cooling device that can efficiently cool a heat exchanger.

### Solution to Problem

A vehicle cooling device relating to a first form comprises: a front side heat exchanger that introduces air from further toward a vehicle front side than a power unit; and a rear side heat exchanger that is disposed further toward a vehicle rear side than the power unit and the front side heat exchanger, and that introduces air, that has not passed-through the front side heat exchanger, from a vehicle front side.

Air at the periphery of the power unit is warmed by the power unit, and the air that is warmed by the power unit flows toward the vehicle rear side of the power unit due to traveling of the vehicle. In the vehicle cooling device relating to the first aspect, the front side heat exchanger introducing air from further toward the vehicle front side than the power unit, i.e., introducing air that has been warmed by the power unit, is suppressed. Therefore, the efficiency of the heat exchange of the front side heat exchanger can be improved. Further, the rear side heat exchanger is disposed further toward the vehicle rear side than the power unit and the front side heat exchanger, and introduces air, that has not passed-through the front side heat exchanger, from the vehicle front side. Therefore, the efficiency of the heat exchange of the rear side heat exchanger can be improved.

In this way, in the vehicle cooling device relating to the first aspect, the efficiency of the heat exchange of both the heat exchanger and the rear side heat exchanger can be improved.

In a vehicle cooling device relating to a second aspect, the vehicle cooling device relating to the first aspect comprises: a front side fan that guides air to the front side heat exchanger; and a rear side fan that guides air to the rear side heat exchanger.

In the vehicle cooling device relating to the second aspect, due to the front side fan being operated, air is guided to the front side heat exchanger, and the air that has passed through the front side heat exchanger can be discharged-out efficiently. Therefore, the efficiency of the heat exchange of the front side heat exchanger can be improved.

Further, due to the rear side fan being operated, air is guided to the rear side heat exchanger, and the air that has passed through the rear side heat exchanger can be discharged-out efficiently. Therefore, the efficiency of the heat exchange of the rear side heat exchanger can be improved.

In a vehicle cooling device relating to a third aspect, in the vehicle cooling device relating to the first aspect or the second aspect, the front side heat exchanger introduces air at least from an upper side of a vehicle front portion, and the rear side heat exchanger introduces air at least from a lower side of the vehicle front portion.

In the vehicle cooling device relating to the third aspect, the front side heat exchanger introduces air from at least the upper side of the vehicle front portion, and the front side heat exchanger carries out heat exchange by the air that is introduced from the upper side of the vehicle front portion.

On the other hand, the rear side heat exchanger introduces air from at least the lower side of the vehicle front portion, and the rear side heat exchanger carries out heat exchange by the air that has introduced air from the lower side of the vehicle front portion.

In a vehicle cooling device relating to a fourth aspect, in the vehicle cooling device relating to the third aspect, air, that has passed through the front side heat exchanger, passes above the rear side heat exchanger and is guided to a vehicle rear.

In the vehicle cooling device relating to the fourth aspect, air, that has passed through the front side heat exchanger and been warmed, passes above the rear side heat exchanger and is guided to the vehicle rear. Therefore, the air, that has passed through the front side heat exchanger and been warmed, being introduced into the rear side heat exchanger is suppressed.

In a vehicle cooling device relating to a fifth aspect, in the vehicle cooling device of any one of the first aspect through the fourth aspect, the power unit has a main body that generates driving force that drives wheels, and a transmission that is mounted to a lower side of a vehicle width direction side portion of the main body and that transmits the driving force to the wheels, and the front side heat exchanger is disposed above the transmission.

In the vehicle cooling device relating to the fifth aspect, the transmission is mounted to the lower side of a vehicle width direction side portion of the main body of the power unit. Therefore, space opens-up at the vehicle width direction side of the main body and at the upper side of the transmission. In the vehicle cooling device relating to the fifth aspect, by placing the front side heat exchanger in this opened-up space, the space can be utilized efficiently. Further, because the main body of the power unit is not disposed in the vehicle longitudinal direction of the transmission, the flow of air that passes through the front side heat exchanger is not impeded by the main body of the power unit, and the heat exchange efficiency of the front side heat exchanger can be improved.

In a vehicle cooling device relating to a sixth aspect, in the vehicle cooling device of any one of the first aspect through the fifth aspect, the front side heat exchanger is a condenser that is used at a heat pump of an air conditioner, and the rear side heat exchanger is a radiator that carries out cooling of the power unit.

In the vehicle cooling device relating to the sixth aspect, the front side heat exchanger is a condenser that is used at the heat pump of an air conditioner. Therefore, at the time when the air conditioner operates, the condenser carries out heat exchange.

On the other hand, the rear side heat exchanger is a radiator that carries out cooling of the power unit. Therefore, at the time of cooling the power unit, the radiator carries out heat exchange.

Because the condenser introduces in air at least from further toward the vehicle front side than the power unit, the efficiency of the heat exchange of the condenser can be improved.

The radiator is disposed further toward the vehicle rear side than the power unit and the condenser, and introduces air, that has not passed through the condenser, in from the vehicle front side. Therefore, the efficiency of the heat exchange of the radiator can be improved.

In a vehicle cooling device relating to a seventh aspect, in the vehicle cooling device of any one of the first aspect through the sixth aspect, a duct that extends in a vehicle front direction is mounted to a vehicle front side of the front side heat exchanger, and an end portion at a vehicle front side of the duct is positioned further toward a vehicle front side than a vehicle front end of the power unit.

At the time of traveling, air is introduced from the vehicle front end side into the power unit chamber in which the power unit is disposed, and a flow of air that is directed toward the vehicle rear is generated within the power unit chamber. Therefore, the air at the periphery of the power unit, that is warmed by the heat of the power unit, flows toward the vehicle rear side.

In the vehicle cooling device relating to the seventh aspect, a duct, that extends in the vehicle front direction and whose end portion at the vehicle front side, i.e., opening portion at the vehicle front side, is positioned further toward the vehicle front side than the vehicle front end of the power unit, is mounted to the vehicle front side of the front side heat exchanger. Therefore, at the time of traveling, air in the vicinity of the power unit, that is warmed by the heat of the power unit, being introduced into the front side heat exchanger is suppressed. Note that, by setting the position of the end portion at the vehicle front side of the duct as far away as possible toward the vehicle front side from the power unit, for example, even at times when the vehicle is stopped, the air at the periphery of the power unit being introduced into the front side heat exchanger can be suppressed.

In a vehicle cooling device relating to an eighth aspect, the vehicle cooling device relating to the second aspect comprises: a temperature sensor that measures at least one of a temperature of the power unit or a temperature of a power unit chamber in which the power unit is disposed; and a control device that controls operation of the front side fan and the rear side fan on the basis of temperature information measured at the temperature sensor.

In the vehicle cooling device relating to the eighth aspect, the temperature sensor measures at least one of the temperature of the power unit or the temperature of the power unit chamber. On the basis of the temperature measured by the temperature sensor, the control device controls the operations of the front side fan and the rear side fan.

### Advantageous Effects of Invention

As described above, in accordance with the vehicle cooling device relating to the first aspect, the front side heat exchanger and the rear side heat exchanger can be cooled efficiently.

In accordance with the vehicle cooling device relating to the second aspect, the efficiency of the heat exchange of the front side heat exchanger and the rear side heat exchanger can be improved.

In accordance with the vehicle cooling device relating to the third aspect, the front side heat exchanger carries out heat exchange by air that is introduced from the upper side of the vehicle front, and the rear side heat exchanger carries out heat exchange by air that is introduced from the lower side of the vehicle front. Namely, the front side heat exchanger and the rear side heat exchanger introduce air from separate places, and can carry out heat exchange efficiently. Further, because the front side heat exchanger and the rear side heat exchanger can carry out heat exchange efficiently, compactness and lightening of the weight of the front side heat exchanger and the rear side heat exchanger can also be devised.

In accordance with the vehicle cooling device relating to the fourth aspect, air, that has passed through the front side heat exchanger and been warmed, being introduced into the rear side heat exchanger is suppressed. Therefore, the efficiency of the heat exchange of the rear side heat exchanger can be improved.

In accordance with the vehicle cooling device relating to the fifth aspect, the front side heat exchanger is disposed in the space above the transmission, and that space can be utilized effectively. Further, by disposing the front side heat exchanger in the space above the transmission, air flows smoothly through the front side heat exchanger, and the efficiency of the heat exchange of the front side heat exchanger can be improved.

In accordance with the vehicle cooling device relating to the sixth aspect, the heat exchange efficiency of the condenser and the radiator can be improved.

In accordance with the vehicle cooling device relating to the seventh aspect, by providing the duct, that extends in the vehicle front direction and whose end portion at the vehicle front side, i.e., opening portion at the vehicle front side, is positioned further toward the vehicle front side than the vehicle front end of the power unit, at the vehicle front side of the front side heat exchanger, air at the periphery of the power unit being introduced into the front side heat exchange can be suppressed.

In accordance with the vehicle cooling device relating to the eight aspect, the control device controls the operations of the front side fan and the rear side fan on the basis of temperature information measured by the temperature sensor. Therefore, by switching the on/off of the front side fan and the rear side fan, the temperature of the power unit chamber in which the power unit is disposed can be set rapidly, whether it is warm or cool. Therefore, the warming-up performance of the power unit can be improved, and heat damage to the power unit chamber can be suppressed as well.

### BRIEF DESCRIPTION OF DRAWINGS

Fig. 1 is a perspective view showing the front portion of an automobile to which a vehicle cooling device relating to an embodiment of the present invention is applied.
Fig. 2 is a cross-sectional view along line 2-2 of Fig. 1, showing the internal structure of the front portion of the automobile.
Fig. 3 is a front view of a power unit and a condenser.
Fig. 4 is a perspective view, seen obliquely from the vehicle front side, of the power unit and the condenser.
Fig. 5 is a block diagram showing the structure of a control system.

### DESCRIPTION OF EMBODIMENTS

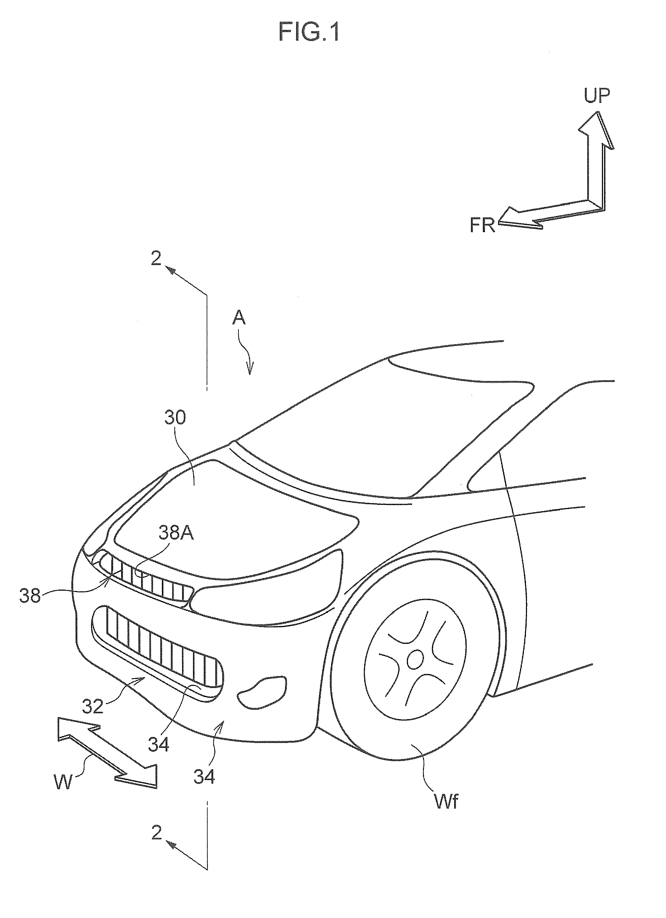

An embodiment of a vehicle cooling device of the present invention is described on the basis of Fig. 1 through Fig. 5.

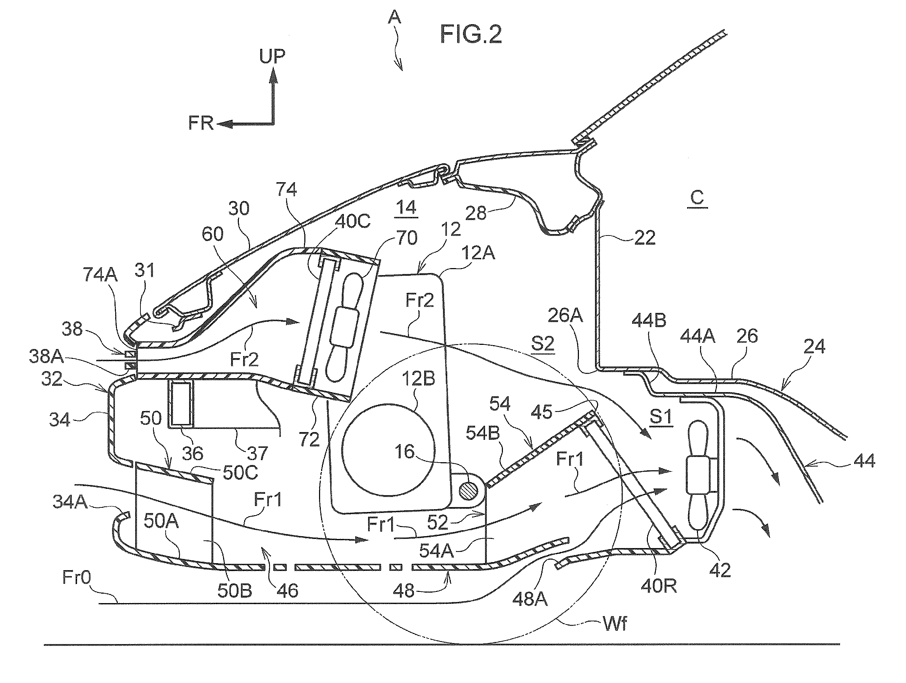

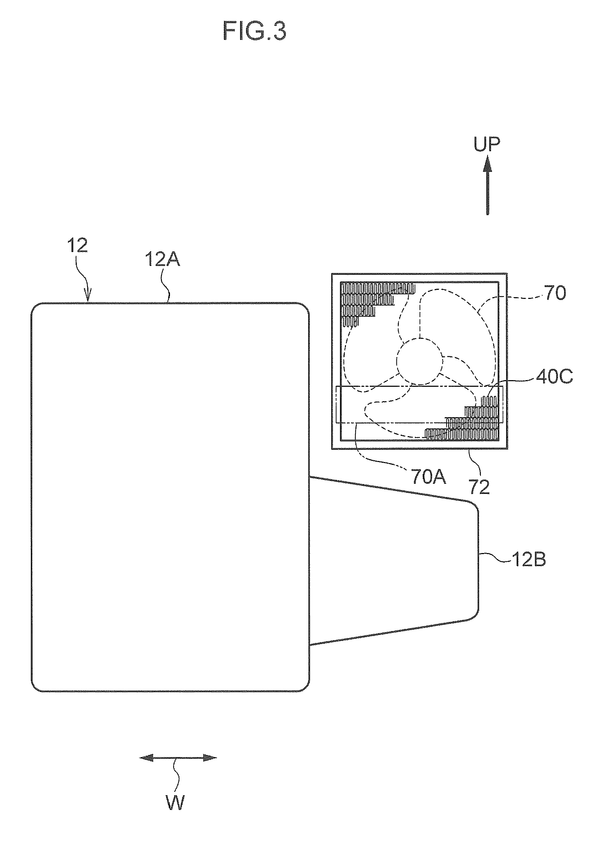

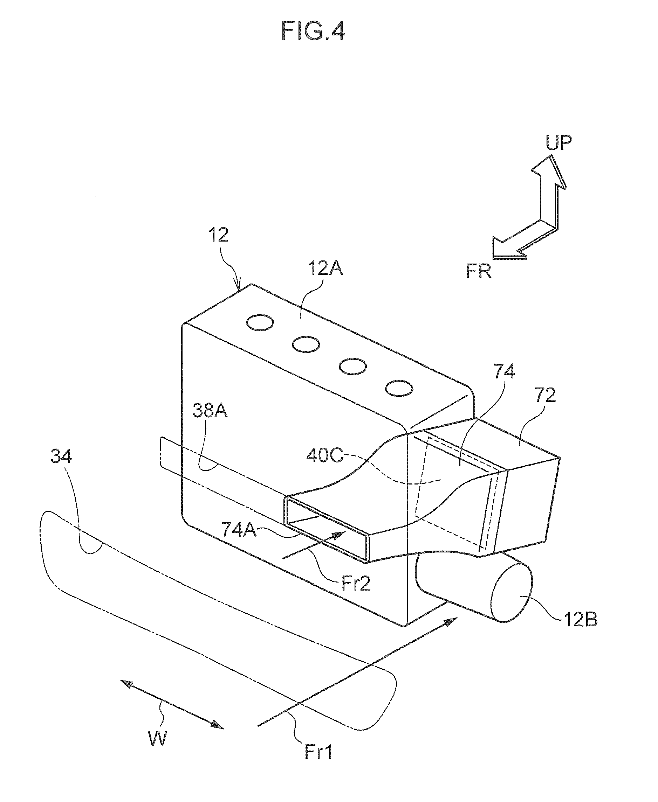

The front portion of an automobile is shown in a perspective view in Fig. 1, and the internal structure of the front portion of the automobile is shown in Fig. 2 in a cross-sectional view seen from the side surface. A power unit 12 and a condenser 40C are shown in a front view in Fig. 3, and the power unit 12 and a condenser 14C are shown in a perspective view in Fig. 4. Note that arrow FR shown appropriately in these drawings indicates the vehicle front side, arrow UP indicates the vehicle upper side, and arrow W indicates the vehicle width direction.

### (Schematic Structure of Automobile)

As shown in Fig. 2, a power unit chamber (an element that can also be interpreted as an "engine compartment" in the case of the present embodiment) 14 is disposed at the front portion of an automobile (vehicle) A, and the power unit 12 is disposed at the interior of the power unit chamber 14. The automobile A of the present embodiment is a so-called front-engine, front-drive vehicle.

The power unit 12 generates driving force for the automobile A to travel, and the power unit 12 of the present embodiment is structured to include an engine 12A that serves as a main body and that is an internal combustion engine that serves as a driving source for driving front wheels Wf.

Note that the power unit 12 may be structured to include the engine 12A and an electric motor (not shown). As automobiles that use both the engine 12A and an electric motor, there are automobiles called HV (hybrid) vehicles, PHV (plug-in hybrid) vehicles, and the like. Further, a supercharger may be mounted to the engine 12A.

As shown in Fig. 3 and Fig. 4, the power unit 12 of the present embodiment is structured with the main portions thereof being the engine 12A that is disposed sideways and has a crank shaft (not illustrated) that runs along the vehicle width direction, and a transmission 12B that is connected to the engine 12A. In the power unit 12 of the present embodiment, the transmission 12B is mounted to the lower side of a vehicle width direction side portion (the vehicle left side portion) of the engine 12A.

As shown in Fig. 2, a drive shaft 16, that extends from the power unit 12 in the vehicle width direction (the direction orthogonal to the surface of the drawing of Fig. 2), is connected so as to be able to transmit driving force to the front wheels Wf.

As shown in Fig. 1 and Fig. 2, the upper side of the power unit chamber 14, in which the above-described power unit 12 is disposed, can be opened and closed by a hood 30.

Note that a hood receiving portion 31, that extends in the vehicle width direction and supports the distal end side of the hood 30, is provided at the power unit chamber 14.

As shown in Fig. 2, the rear end portion of the power unit chamber 14 and a vehicle cabin C are separated by a dash panel (vehicle body passenger cabin front wall) 22. The lower end portion of the dash panel 22 is joined to the front end portion of a floor panel 24. A floor tunnel 26 is formed in the central portion in the vehicle width direction of the floor panel 24. The lower end portion of a cowl 28 is joined to the upper end portion of the dash panel 22.

On the other hand, a front bumper cover 34 and a grill 38 are disposed at the front end portion of the power unit chamber 14. The front bumper cover 34 structures a portion of a front bumper 32.

An air intake port 34A for taking air into the power unit chamber 14 interior is formed in the front bumper cover 34.

The air intake port 34A is formed in the lower portion of the front end of the power unit chamber 14, and opens toward the vehicle front. Note that, in Fig. 2, the flow of air that is introduced from the air intake port 34A is indicated by arrow f1, and the flow of air at the vehicle lower side of the power unit chamber 14 is indicated by arrow f0.

A front bumper reinforcement 36 that extends along the vehicle width direction is disposed at the vehicle rear side of the front bumper cover 34. The front bumper reinforcement 36 structures a portion of the front bumper 32, and the vertical sectional shape thereof is formed in a rectangular frame shape, and the both end portions in the longitudinal direction thereof are joined to the front end portions of a pair of left and right front side members 37.

The aforementioned grill 38 is disposed at the upper side of the vehicle width direction intermediate portion of the front bumper cover 34. The grill 38 is disposed between the front end portion of the hood 30 in its closed state and the upper end portion of the front bumper cover 34, and an air intake port 38A for taking air into the power unit chamber 14 interior is formed therein. The air intake port 38A is formed in the upper portion of the front end of the power unit chamber 14, and opens toward the vehicle front. Note that, in Fig. 2, the flow of air that is introduced from the air intake port 38A is indicated by arrow Fr2.

As shown in Fig. 2, at this automobile A, a radiator 40R, that serves as a rear side heat exchanger, is provided so as to close-off the greater part (the part other than the upper end side) of an opening end 26A at the front side of the floor tunnel 26. Namely, in the present embodiment, the radiator 40R is disposed at the vehicle rear side with respect to the power unit 12.

The radiator 40R is cooled by heat exchange with air. The radiator 40R is a heat exchanger that circulates cooling water, that serves as a coolant, between the radiator 40R and the water-cooled-type power unit 12, and cools the power unit 12.

A radiator fan 42 is disposed at the vehicle rear side of the radiator 40R. Due to operation of the radiator fan 42, the radiator fan 42 generates an airflow (cooling wind) that passes through the radiator 40R. Namely, by operating the radiator fan 42, a large amount of cooling wind that carries out heat exchange with cooling water can be made to pass through the radiator 40R from the vehicle front side toward the vehicle rear side.

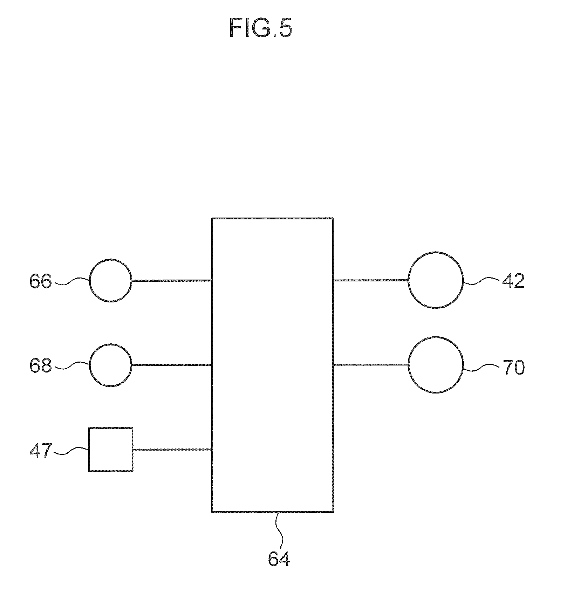

As shown in Fig. 5, the radiator fan 42 is connected to a control device 64. A first sensor 66 that measures the temperature of the power unit 12 (in the present embodiment, the temperature of the cooling water), and a second sensor 68 that measures the temperature of the power unit chamber, are connected to the control device 64. On the basis of temperature information from the first temperature sensor 66 and temperature information from the second temperature sensor 68, the control device 64 can control the operation of the radiator fan 42. For example, the control device 64 can operate the radiator fan 42 at times of high load of the power unit 12, and can stop the radiator fan 42 at times of low temperature or at times of low load of the power unit 12.

As shown in Fig. 2, the vehicle width direction both sides and the upper side of the radiator fan 42 are covered by a fan shroud 44.

A heat exhausting duct 44B is formed at the front end portion side of an upper wall portion 44A of the fan shroud 44, so as to form a gap between the heat exhausting duct 44B and the upper end portion of the radiator 40R.

Namely, a communication hole 45 is structured between this heat exhausting duct 44B and the upper end portion of the radiator 40R. A space S1 between the radiator 40R and the radiator fan 42, and a space S2 at the vehicle rear side of the power unit 12, are communicated by this communication hole 45.

Further, the upper wall portion 44A of the fan shroud 44 is inclined downwardly toward the vehicle rear side. Accordingly, the air, after having passed through the radiator fan 42 and having carried out heat exchange with the cooling water, passes through the fan shroud 44 and is discharged-out toward the floor lower side.

As shown in Figs. 2 through 4, in the present embodiment, the condenser 40C that serves as a second heat exchanger is disposed at a vehicle width direction side of the engine 12A, and further toward the vehicle upper side and the vehicle front side than the transmission 12B. The condenser 40C is an air-cooling type heat exchanger that structures the heat pump of an air conditioner 47 (not shown in Figs. 2 through 4, refer to Fig. 5).

As shown in Fig. 2, a condenser fan 70 is disposed at the vehicle rear side with respect to the condenser 40C. As shown in Fig. 5, the condenser fan 70 is connected to the control device 64. The control device 64 can cause the condenser fan 70 to operate on the basis of the temperature measurement information from the first temperature sensor 66 and the second temperature sensor 68, and further, can cause the condenser fan 70 to operate at times when the air conditioner 47 operates.

As shown in Fig. 2 and Fig. 4, the condenser fan 70 and the outer peripheral side of the condenser 40C are covered by a fan shroud 72.

A duct 74 that extends in the vehicle front direction is mounted to the vehicle front side of the condenser 40C. An end portion 74A at the vehicle front side of the duct 74 is positioned further toward the vehicle front side than the front end of the power unit 12.

As shown in Fig. 2, the duct 74 opens at the vehicle rear side of the air intake port 38A.

Due to operation thereof, the condenser fan 70 generates airflow (cooling wind) that passes through the condenser 40C. Accordingly, due to the condenser fan 70 being operated, a large amount of air that carries out heat exchange with the coolant of the heat pump can be made to pass through the condenser 40C.

Note that the condenser fan 70 of the present embodiment blows the air, that has passed through the condenser 40C, toward the communication hole 45 that is positioned at the diagonally vehicle rear and lower side. Accordingly, air, after having passed through the condenser 40C and having carried out heat exchange with the coolant, flows into the communication hole 45.

The cooling wind introducing structure for efficiently cooling the condenser 40C and the radiator 40R is described in detail hereinafter.

As shown in Fig. 2, a first passage 46, that guides air (cooling wind) from the air intake port 34A formed in the lower portion of the front end of the power unit chamber 14 via the vehicle lower side of the power unit 12 to the radiator 40R, is formed in the power unit chamber 14. The upper wall portion of the first passage 46 is structured by an upper wall portion 50C of a first duct 50 that is described later, a lower surface portion of the power unit 12, the upper wall portion of a second duct 52 (an upper wall portion 54B of a shroud 54) that is described later, and the like.

Further, the lower wall portion of the first passage 46 is structured by an undercover 48.

This undercover 48 covers the power unit chamber 14 from the lower side in the vehicle vertical direction.

The first passage 46 has the first duct 50 that guides air from the air intake port 34A to the vehicle lower side of the power unit 12. The rear end portion of the first duct 50 is disposed in the vicinity of the lower end portion of the power unit 12. In the present embodiment, as an example, the first duct 50 is made to be a region that is molded integrally with the undercover 48. Namely, at the first duct 50, a lower wall portion 50A thereof is structured by the cover main body of the undercover 48, and side wall portions 50B at both sides in the vehicle width direction are structured by standing walls that stand from the cover main body of the undercover 48, and the upper wall portion 50C integrally connects the upper end portions of the pair of side wall portions 50B. Note that, in the present embodiment, the first duct 50 is a region that is molded integrally with the undercover 48, but the first duct 50 may be made to be a body separate from the undercover 48.

The first passage 46 has the second duct 52 that is disposed at the vehicle rear side of the first duct 50 and at the vehicle front side of the radiator 40R. The front end portion of the second duct 52 is disposed so as to be apart from the rear end portion of the first duct 50, and the second duct 52 guides air, that has passed through the first duct 50 interior, to the radiator 40R.

Further, the lower wall portion of the second duct 52 is structured by the undercover 48, and the side wall portions and the upper wall portion of the second duct 52 are structured by the shroud 54.

The shroud 54 forms a substantial, backward U-shape that opens downwardly as seen from the vehicle front surface, and extends substantially in the vehicle longitudinal direction (more precisely, such that the upper surface is inclined slightly toward the vehicle upper side toward the vehicle rear). Namely, the shroud 54 has a pair of left and right side wall portions 54A that face one another in the vehicle width direction, and the upper wall portion 54B that connects the upper edge portions of the pair of side wall portions 54A. The side wall portions 54A structure the side wall portions of the second duct 52, and the upper wall portion 54B structures the upper wall portion of the second duct 52.

The opening portion at the rear end side of the shroud 54 is mounted to the outer peripheral edge portion of the radiator 40R, and is disposed so as to face the opening portion at the front end side of the fan shroud 44.

Note that, in the present embodiment, the shroud 54 and the fan shroud 44 are made to be separate bodies. However, there may be a structure in which the shroud 54 and the fan shroud 44 are made integral, and the heat exhausting duct 44B is formed integrally with the upper wall portion thereof at the upper side of the region between the radiator 40R and the radiator fan 42.

The flow passage of the second duct 52, that is structured to include the shroud 54, communicates with the fan shroud 44 via the radiator 40R.

At the shroud 54, the opening portion at the lower end side is directed toward the undercover 48 side, and the opening portion at the front end side is directed toward the rear end opening portion side of the first duct 50.

At the vehicle lower side of the shroud 54, an air intake port 48A, that is for guiding traveling wind that flows between the undercover 48 and a road surface R to the radiator 40R via the space within the second duct 52, is formed in the undercover 48.

Due to the above, accompanying the traveling of the automobile A, a first airflow Fr1 that passes from the air intake port 34A through the first passage 46, and a lower side airflow Fr0 that passes through the air intake port 48A and goes via the interior of the rear portion space of the second duct 52, are guided to the radiator 40R.

In the present embodiment, the radiator 40R is disposed at an incline (a forward incline) such that the upper end side thereof is positioned further toward the vehicle front side than the lower end side thereof.

In the present embodiment, there is a structure in which the cooling wind (the lower side airflow Fr0 and the first airflow Fr1), that is based on the traveling wind, passes along a direction intersecting the front surface of the radiator 40R. Further, in the present embodiment, also due to operation of the radiator fan 42, cooling wind (the lower side airflow Fr0 and the first airflow Fr1) is generated. Namely, there is a structure in which, due to the radiator fan 42 operating, cooling wind (the lower side airflow Fr0 and the first airflow Fr1) is generated even at times when the automobile A is traveling at low speed and at times when the automobile A is stopped.

On the other hand, the space S1 at the vehicle rear side of the radiator 40R and the vehicle front side (the upstream side) of the radiator fan 42 communicates with the space S2 at the vehicle rear side of the interior of the power unit chamber 14.

Due thereto, a second passage 60, that guides air from the air intake port 38A that is formed in the upper portion of the front end of the power unit chamber 14 via the vehicle upper side of the first passage 46 and the vehicle upper side of the radiator 40R to the vehicle rear side of the radiator 40R, is formed in the power unit chamber 14.

At the second passage 60, the wall portion at the vehicle upper side and vehicle rear side with respect to arrow Fr2 (a second airflow that passes through the second passage 60) in Fig. 2 is structured by the hood 30, the cowl 28, the dash panel 22, the floor tunnel 26, and the fan shroud 44 and the like.

Further, at the second passage 60, the wall portion at the vehicle lower side is structured by the upper wall portion 50C of the first duct 50, the upper surface of the transmission 12B, the upper wall portion of the second duct 52 (the upper wall portion 54B of the shroud 54), and the upper surface portions of parts installed within the power unit chamber 14 of which detailed illustration is omitted, and the like.

In other words, as shown in Fig. 2, the upper wall portion 50C of the first duct 50 separates, above and below, the space that is further toward the vehicle front side than the power unit 12 in the power unit chamber 14, and the upper wall portion of the second duct 52 (the upper wall portion 54B of the shroud 54) separates, above and below, the space that is further toward the vehicle rear side than the power unit 12 in the power unit chamber 14. Further, the second passage 60 and the first passage 46 are formed so as to separate the power unit chamber 14 above and below.

The second airflow Fr2, that passes through the second passage 60 from the air intake port 38A, is generated accompanying traveling of the automobile A, and is generated also due to operation of the condenser fan 70. Namely, there is a structure in which, due to the condenser fan 70 operating, the second airflow Fr2 that is cooling wind is generated even at times when the automobile A is traveling at low speed and at times when the automobile A is stopped.

Due to the above, at the power unit chamber 14 of the present embodiment, there is a structure in which passage routes of air within the power unit chamber 14 are divided above and below.

### (Operation and Effects of Embodiment)

The operation and effects of the present embodiment are described next.

When the automobile A travels, air (external air) is introduced into the power unit chamber 14 via the air intake port 34A formed in the lower portion of the front end of the power unit chamber 14, the air intake port 38A formed in the upper portion of the front end of the power unit chamber 14, and the air intake port 48A formed in the undercover 48.

Here, the air (external air) that is introduced from the air intake port 38A passes through the second passage 60, and passes through the condenser 40C that is disposed at the intermediate portion of the second passage 60, and, in a case in which the heat pump is operating, heat exchange is carried out between the air and the coolant of the heat pump at the condenser 40C. Note that the air that is warmed at the condenser 40C is discharged-out to the vehicle rear side of the condenser 40C.

The air that is warmed at the condenser 40C is introduced into the space S1 between the radiator 40R and the radiator fan 42 via the communication hole 45 that is positioned above the radiator 40R, and can be discharged-out toward the vehicle rear side via the radiator fan 42.

Note that the air, that is at the periphery of the power unit 12 and is warmed by the heat of the power unit 12, rides on the second airflow Fr2 that flows from the condenser 40C toward the communication hole 45 that is positioned above the radiator 40R, and can be made to flow into the communication hole 45. Accordingly, warmed air gathering at the periphery of the power unit 12 is suppressed.

Further, due to the condenser fan 70 being operated, the efficiency of the heat exchange of the condenser 40C can be improved, and further, because the second airflow Fr2 is strengthened, the warmed air at the periphery of the power unit 12 can be made to flow into the communication hole 45 efficiently.

Note that, when the air conditioner 47 is operating, or in cases in which the temperature of the power unit chamber 14 measured at the second temperature sensor 68 exceeds a preset temperature, the control device 64 can cause the condenser fan 70 to operate regardless of whether the automobile A is in the midst of traveling or is in the midst of being stopped (in the midst of idling).

Due thereto, the temperature of the power unit chamber 14 can be kept low.

In the present embodiment, the duct 74 that extends in the vehicle longitudinal direction is mounted to the vehicle front side of the condenser 40C, and the condenser 40C introduces in air from further toward the vehicle front side than the power unit 12, but does not introduce in the warmed air at the periphery of the power unit 12 that has been warmed by the heat of the power unit 12. Accordingly, the condenser 40C can carried out heat exchange efficiently.

On the other hand, the air (external air), that has been introduced from the air intake port 34A formed in the lower portion of the front end of the power unit chamber 14,is guided to the radiator 40R via the first duct 50, the vehicle lower side of the power unit 12, and the second duct 52, i.e., via the first passage 46. Further, the air (external air), that is introduced from the air intake port 48A formed in the undercover 48, also is guided to the radiator 40R. At the radiator 40R, heat exchange is carried out between the air and the coolant (cooling water) of the power unit 12. The air that is warmed at the radiator 40R is discharged-out toward the vehicle rear side. Here, due to the radiator fan 42 being operated, a large amount of air can be made to pass through the radiator 40R, and heat exchange can be carried out efficiently at times of high load of the power unit 12 or the like.

In the present embodiment, the air that is warmed at the condenser 40C is discharged-out, via the communication hole 45 that is disposed at the upper side of the radiator 40R, toward the vehicle rear side by the radiator fan 42, without passing through the radiator 40R. Therefore, there is no flowing-in of the air, that is warmed by the condenser 40C, and deteriorating of the efficiency of the heat exchange of the radiator 40R whatsoever, and the radiator 40R can carry out heat exchange efficiently.

Note that the control device 64 can stop operation of the radiator fan 42, for example, at times of low load of the power unit 12. Further, in cases in which the temperature of the power unit 12 measured at the first temperature sensor 66 (the temperature of the cooling water in the present embodiment) is lower than a preset temperature, the control device 64 can stop operation of the radiator fan 42 in order to carry out a warming-up operation.

Further, in the present embodiment, because the flow of air within the power unit chamber 14 is divided above and below by the first passage 46 and the second passage 60, the first airflow Fr1 that is at the lower side relatively, and the second airflow Fr2 that is at the upper side relatively, respectively flow smoothly through the power unit chamber 14 interior

As described above, in accordance with the present embodiment, the efficiency of the heat exchange of the condenser 40C, and the efficiency of the heat exchange of the radiator 40R, can both be improved.

Further, in accordance with the present embodiment, because it is possible to lower the temperature of the power unit chamber 14, heat-resistant materials (parts that are countermeasures to heat) having a relatively low heat-resistance performance can be applied to the power unit chamber 14 interior, and therefore, a decrease in costs also can be realized.

### [Other Embodiments]

Although an embodiment of the present invention has been described above, the present invention is not limited to the above description, and, other than the above, can of course be implemented by being modified in various ways within a scope that does not deviate from the gist thereof.

In the above-described embodiment, the first passage 46 has the first duct 50 and the second duct 52, and such a structure is preferable. However, for example, there may be a structure in which the first passage and the second passage are partitioned above and below by an oil pan and a differential case or the like, or by a part used exclusively for partitioning.

As a modified example of the above-described embodiment, a portion of or the entirety of the radiator 40R may be disposed further toward the vehicle front side than the opening end 26A at the front side of the floor tunnel 26.

Although the air intake port 48A is formed in the undercover 48 in the above-described embodiment, there may be a structure in which the air intake port 48A is not formed. Although the power unit 12 of the above-described embodiment is structured to include an internal combustion engine, the power unit 12 may be structure that does not include an internal combustion engine and is only an electric motor. Namely, in this case, the automobile A is a so-called electric automobile.

In the above-described embodiment, the duct 74 that extends in the vehicle longitudinal direction is provided at the vehicle front side of the condenser 40C such that the condenser 40C does not introduce in the warmed air at the periphery of the power unit 12. However, the duct 74 can be omitted provided that the condenser 40C does not introduce in the warmed air at the periphery of the power unit 12. In this case, it is preferable that the front surface of the condenser 40C be disposed further toward the vehicle front side than the front surface of the power unit 12.

Further, in the above-described embodiment, the condenser 40C is disposed above, and slightly toward the vehicle front side of, the transmission 12B. However, by making the length in the vehicle longitudinal direction of the duct 74 long, the position of the condenser 40C can be placed further toward the vehicle rear side than the position shown in Fig. 2. Note that, by extending the duct 74 toward the vehicle front side, and setting the position of the end portion 74A at the vehicle front side as far away as possible toward the vehicle front side from the power unit 12, and setting the position near to the air intake port 38A, for example, even if the condenser fan 70 is operating at the time when the automobile A is stopped, the air at the periphery of the power unit being introduced into the front side heat exchange can be suppressed.

Note that, although not illustrated, a duct for efficiently introducing the air, that is discharged-out from the fan shroud 72, into the communication hole 45 may be disposed between the fan shroud 72 and the communication hole 45.

Although the above-described embodiment describes an example in which the present invention is used in a front engine vehicle, the present invention can be applied as well to a midship engine vehicle, a rear engine vehicle, or the like.

Although the engine 12A of the power unit 12 is placed sideways in the above-described embodiment, the present invention is not limited to this, and the engine 12A may be placed vertically. Also in the case in which the engine 12A is placed vertically, it suffices to dispose the condenser 40C at a vehicle width direction side of the engine 12A such that the condenser 40C introduces air in from further toward the vehicle front side than the engine 12A.

In the above-described embodiment, the two air intake ports that are the air intake port 38A and the air intake port 34A are provided at the upper side and the lower side of the front portion of the vehicle, but the present invention is not limited to this, and there may be one air intake port. In a case in which there is one air intake port, it suffices for the first airflow Fr1 to be generated at the lower side of the front bumper reinforcement 36, and for the second airflow Fr2 to be generated at the upper side of the front bumper reinforcement 36.

The condenser 40C structures the heat pump of the air conditioner in the above-described embodiment, but the present invention is not limited to this. The condenser 40C may be a device that carries out cooling of another part (e.g., an electrical part having a large amount of generated heat, or the like) other than the heat pump.

## Claims

1. A vehicle cooling device comprising:
a front side heat exchanger that introduces air from further toward a vehicle front side than a power unit; and
a rear side heat exchanger that is disposed further toward a vehicle rear side than the power unit and the front side heat exchanger, and that introduces air, that has not passed-through the front side heat exchanger, from a vehicle front side.

2. The vehicle cooling device of Claim 1, comprising:
a front side fan that guides air to the front side heat exchanger; and
a rear side fan that guides air to the rear side heat exchanger.

3. The vehicle cooling device of Claim 1 or Claim 2, wherein
the front side heat exchanger introduces air at least from an upper side of a vehicle front portion, and
the rear side heat exchanger introduces air at least from a lower side of the vehicle front portion.

4. The vehicle cooling device of Claim 3, wherein air, that has passed through the front side heat exchanger, passes above the rear side heat exchanger and is guided to a vehicle rear.

5. The vehicle cooling device of any one of Claim 1 through Claim 4, wherein
the power unit has a main body that generates driving force that drives wheels, and a transmission that is mounted to a lower side of a vehicle width direction side portion of the main body and that transmits the driving force to the wheels, and
the front side heat exchanger is disposed above the transmission.

6. The vehicle cooling device of any one of Claim 1 through Claim 5, wherein
the front side heat exchanger is a condenser that is used at a heat pump of an air conditioner, and
the rear side heat exchanger is a radiator that carries out cooling of the power unit.

7. The vehicle cooling device of any one of Claim 1 through Claim 6, wherein
a duct that extends in a vehicle front direction is mounted to a vehicle front side of the front side heat exchanger, and
an end portion at a vehicle front side of the duct is positioned further toward a vehicle front side than a vehicle front end of the power unit.

8. The vehicle cooling device of Claim 2, comprising:
a temperature sensor that measures at least one of a temperature of the power unit or a temperature of a power unit chamber in which the power unit is disposed; and
a control device that controls operation of the front side fan and the rear side fan on the basis of temperature information measured at the temperature sensor.
